# EUROPEAN PATENT APPLICATION

(11) **EP 4 651 537 A1**
(43) Date of publication of application: **19.11.2025**
(21) Application number: 25171909.2
(22) Date of filing: 23.04.2025
(51) Int. Cl.: H04W 16/18, H04W 16/22, H04L 41/14, H04W 24/02

(54) **NETWORK IMPROVEMENT**

(30) Priority: 14.05.2024 GB 202406816
(71) Applicant: IONX Networks Limited, Marlow, Buckinghamshire SL7 1EY (GB)
(72) Inventor: LODOLA, Domenico, Buckinghamshire, SL7 1EY (GB)
(74) Representative: D Young & Co LLP

(57) **Abstract**

A computer-implemented method for determining the impact of a cell site deployment plan on a telecommunications network, the method comprising: obtaining a map of baseline network performance of the telecommunications network in a target area; obtaining a deployment plan for the telecommunications network in the target area, wherein the deployment plan comprises a plurality of potential cell sites; generating, using a model, a signal propagation map for each of the plurality of potential cell sites; generating a map of predicted network performance of the telecommunications network after deployment of the deployment plan based on combining the map of baseline network performance and the plurality of signal propagation maps; determining an impact of the deployment plan by performing a comparison between the baseline network performance and predicted network performance.

## Description

### FIELD AND BACKGROUND

The present techniques relate to determining the impact of a cell site deployment plan on a telecommunications network. More particularly, but not exclusively, the disclosure describes a method, computer program and device which generates a map of predicted network performance, and determines impact, after deployment based on an obtained map of baseline network performance and an obtained deployment plan.

In recent years the demands on mobile networks have steadily increased with consumers increasingly coming to expect consistent high performance levels with minimal signal interruptions or other connectivity issues. Over time, however, the performance levels associated with a telecommunications network can deteriorate, for example, due to increases in demand and/or a changing environment (e.g. from new construction which can act as obstacles to network signals).

One approach to improving network performance is to add new cell sites distributed across a target region to increase capacity uniformly. However, this approach requires significant investment to provide both in time and resource. Additionally, the present inventors have noted that the impact of such increased capacity can be uneven in real-world environments which can reduce the effectiveness of such approaches and can leave zones of poor performance.

At least certain embodiments of the present disclosure address one or more of these problems as set out above.

### SUMMARY

Viewed from one perspective, there is provided a computer-implemented method for determining the impact of a cell site deployment plan on a telecommunications network, the method comprising: obtaining a map of baseline network performance of the telecommunications network in a target area; obtaining a deployment plan for the telecommunications network in the target area, wherein the deployment plan comprises a plurality of potential cell sites; generating, using a model, a signal propagation map for each of the plurality of potential cell sites; generating a map of predicted network performance of the telecommunications network after deployment of the deployment plan based on combining the map of baseline network performance and the plurality of signal propagation maps; determining an impact of the deployment plan by performing a comparison between the map of baseline network performance and the map of predicted network performance.

In other words, the present approach can be considered as a technique by which the impact of a cell site deployment plan into an existing telecommunications network, such as a Mobile Network Operator (MNO) network or a Neutral Host (NH) network which combines multiple MNO and/or private networks, can be determined. From one perspective the approach can be considered as doing so by obtaining a map of the current/baseline network performance of the telecommunications network to be augmented in a target area. It further obtains a deployment plan for the target area setting out a plurality of potential cell sites to be added. From this, the approach generates a map of predicted performance after deployment by modelling and combining the signal propagation of each of the potential cell sites with the baseline network performance. Finally this change in network performance before and after deployment is compared to determine the impact of the deployment plan.

As identified by the present inventors, this approach allows for the effect of a particular deployment plan to be automatically evaluated. This in turn can allow for the effect of the deployment plan to be compared with other deployment plans and can also allow for the benefit of a given deployment plan to be quantified relative to its cost. In addition, by quantitatively determining the effect of a deployment plan using signal propagation modelling, the positive, and in some case negative effects (e.g. from increased signal interference), can be accurately and quantitatively ascertained.

Viewed from one perspective, there is provided a computer program for controlling a device to perform any of the above-described methods. In some examples, the computer program is encoded on a computer-readable medium

Viewed from one perspective, there is provided a device comprising: a processor and data storage, the device being configured to perform any of the above-described methods.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1: Schematically illustrates a method for determining the impact of a cell site deployment plan on a telecommunications network.
Figure 2A: Schematically illustrates a network performance map using data aggregation at a per-hexbin level and 2B: Schematically illustrates a network performance map using data aggregation at a per-building level.
Figure 3: Schematically illustrates a map with superimposed deployment plan for the telecommunications network in the target area.
Figure 4: Schematically illustrates a signal propagation map for a potential cell site.
Figure 5: Schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### DETAILED DESCRIPTION

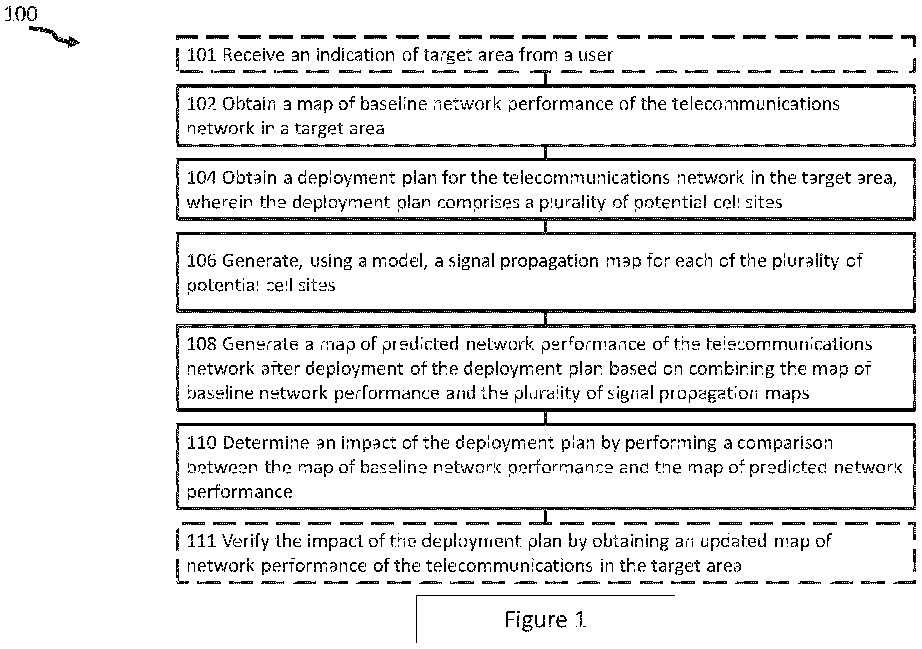

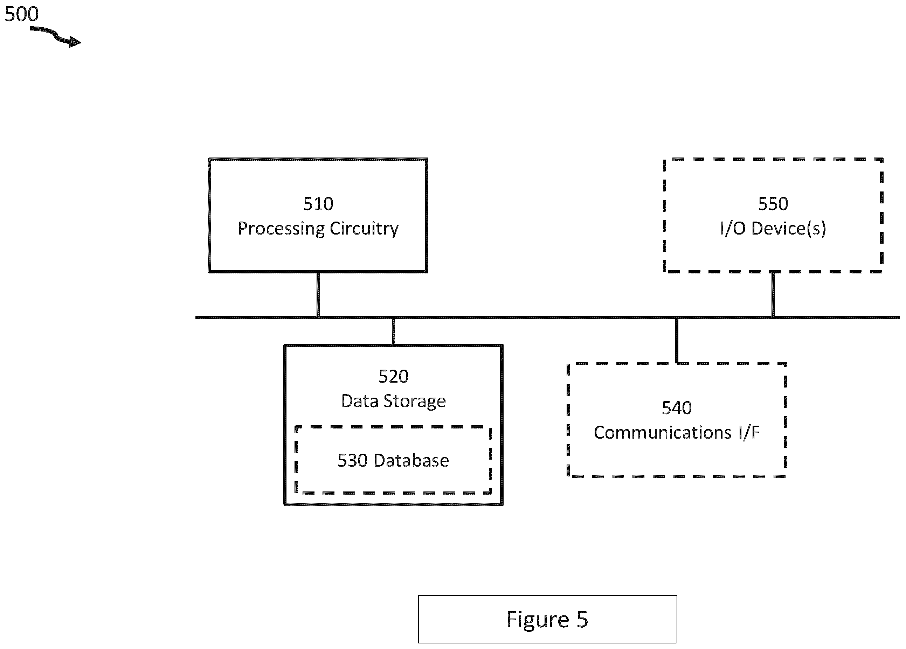

Figure 1 schematically illustrates a method (100) for determining the impact of a cell site deployment plan on a telecommunications network. It will be appreciated that the method can be performed using the electronic device of figure 5. The method includes the following steps.

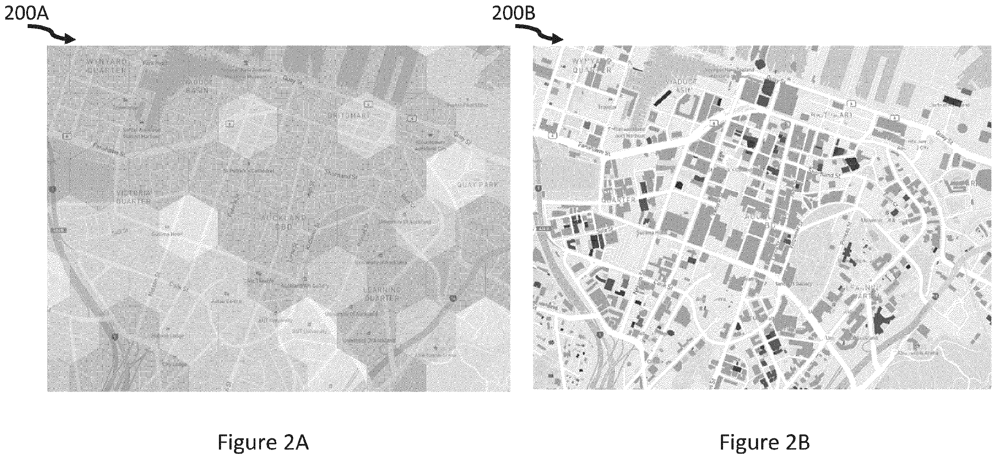

At step 102, the method obtains a map of baseline network performance of the telecommunications network in a target area. Examples of maps of network performance are depicted in Figures 2A, 2B and discussed in further detail below. The method then continues to step 104.

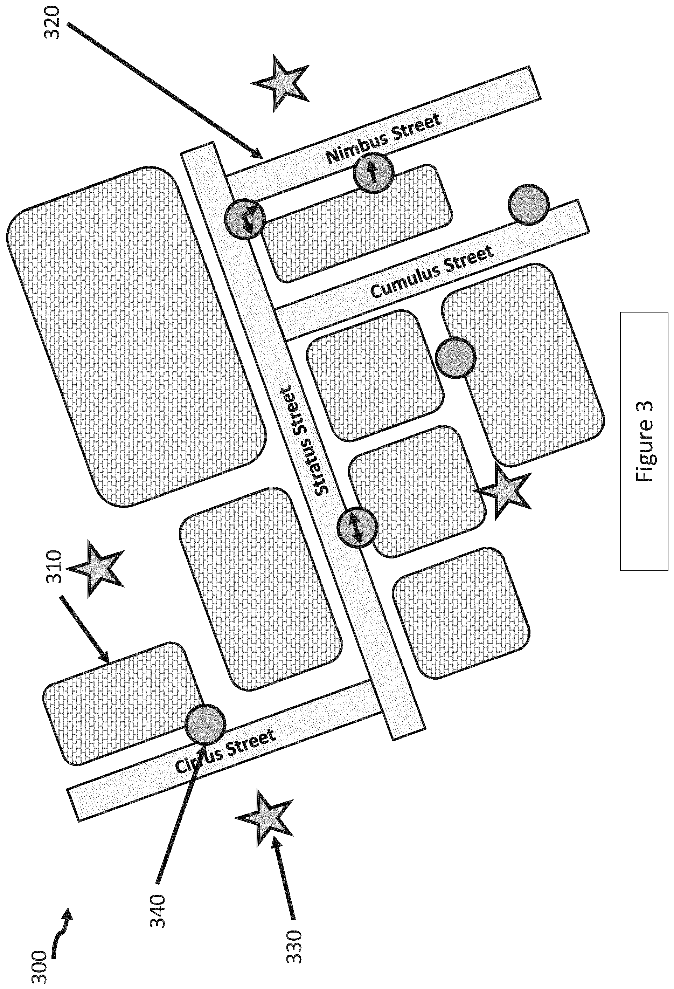

At step 104, the method obtains a deployment plan for the telecommunications network in the target area, wherein the deployment plan comprises a plurality of potential cell sites. An example of a deployment plan is depicted in figure 3 and discussed in further detail below. In some examples, obtaining the deployment plan comprises selecting the plurality of potential cell sites in the deployment plan from a larger plurality of potential cell sites using sampling. Thereby a deployment plan can be automatically determined without the need for user inputs and, in some examples, a plurality of deployment plans can be automatically evaluated by sampling multiple times. In other examples, obtaining the deployment plan comprises receiving an indication of the plurality of potential cell sites for the deployment plan from a user. Thereby a user is able to specify a deployment plan they wish to be tested/evaluated.

The method then continues to step 106.

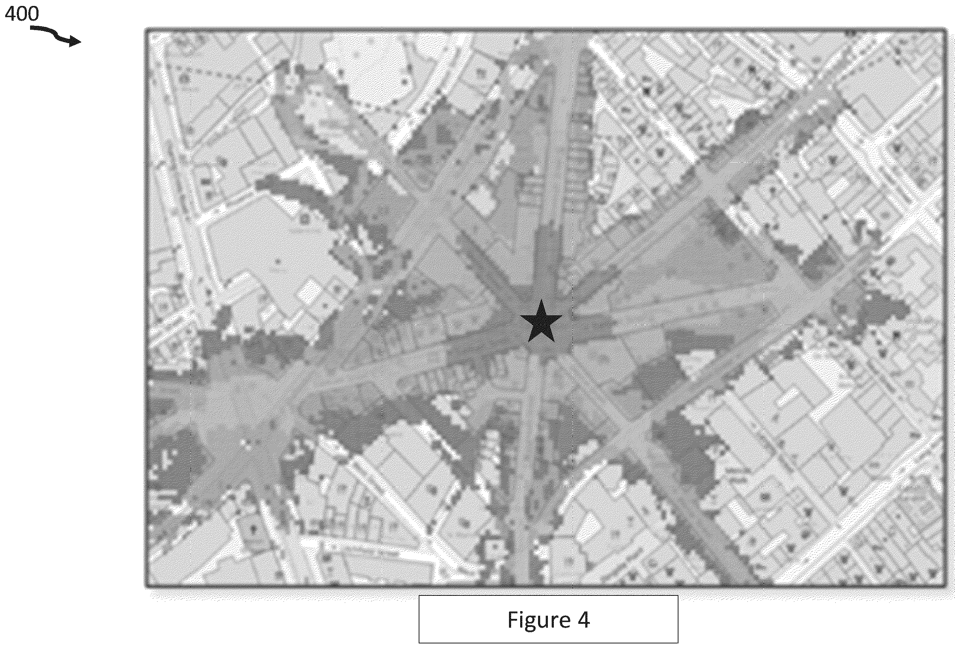

At step 106, the method generates, using a model, a signal propagation map for each of the plurality of potential cell sites. An example of a signal propagation map is depicted in figure 4 and discussed in further detail below. In some examples, the model is a ray tracing model. Thereby a realistic model of how radio signals interact with objects/clutter (e.g. buildings, terrain, vegetation etc.) in the environment can be provided. In some examples, the model may be the ITU Urban Macro Model (particularly suitable for urban environments) as set out in Table Al-2 of ITU-R M.2135-1 (12/2009), hereby incorporated by reference and/or the ITU Rural Macro Model (particularly suitable for rural environments) as set out in Table Al-2 of ITU-R M.2135-1 (12/2009), hereby incorporated by reference.

The method then continues to step 108.

At step 108, the method generates a map of predicted network performance of the telecommunications network after deployment of the deployment plan based on combining the map of baseline network performance and the plurality of signal propagation maps. As mentioned above, examples of maps of network performance are depicted in Figures 2A, 2B and discussed in further detail below. In some examples, the map of baseline network performance and the map of predicted network performance comprise data on one or more of the RSSI, RSRP, SINR and/or RSSNR in the target area. Thereby useful measures of real-world utility are provided for the telecommunications network.

The method then continues to step 110.

At step 110, the method determines an impact of the deployment plan by performing a comparison between the map of baseline network performance and the map of predicted network performance. In some examples, performing the comparison to determine the impact comprises weighting regions of the target area based on degree of utilisation. Thereby a realistic measure of real-world impact can be generated by, for example, providing greater weight to high traffic areas (e.g. main roads, train stations, large offices etc.) and less weight to low traffic areas (e.g. undeveloped land, lakes etc.).

In the present example, the method ends after step 110. However, in some examples step 101 and/or step 111 is performed. In figure 1, step 101 is depicted as being performed before step 102. At step 101, the method receives an indication of the target area from a user. Thereby a user is easily able to specify the area of interest (target area) that the method is to operate on. In figure 1, step 111 is depicted as being performed after step 110. At step 111, the method verifies the impact of the deployment plan by obtaining an updated map network performance of the telecommunications in the target area. Thereby the accuracy of the impact determination can be verified. This in turn can be used to refine the method in future to enhance accuracy, for example, by adjusting parameters of the model which generates the signal propagation map.

In some examples, the updated map of network performance is obtained by processing sensor data on the telecommunications network collected from a plurality of mobile network devices. In some examples, such sensor data is automatically collected from software components running on a large number user equipment (UE) devices such as mobile phones operating in the target area. From one perspective, such data collection can be considered as a form of crowd-sourced data collection. Thereby high-quality and high-resolution data on the state of the telecommunications network can be collected in an efficient manner. Further, such data can be collected from within private spaces such as offices and homes. In other examples, the updated map of network performance is collected by a dedicated survey. Thereby data of a consistent quality and standard is collected. In other examples, the updated map of network performance is generated through modelling. Thereby the updated map of network performance can be obtained without the need for real-world data collection.

In some examples, a plurality of deployment plans for the telecommunications network in the target area are obtained, each deployment plan comprises a different plurality of potential cell sites, signal propagation maps are generated using the model for each of the different pluralities of cell sites, maps of predicted network performance are generated for each of the plurality of deployment plans, and the impact of each of the plurality of deployment plans is determined. Thereby, multiple deployment plans can be evaluated to determine the impact of each of the deployment plans. In some examples, the best deployment plan may be selected thereby allowing for an efficient deployment plan to be utilised. In some examples, the method further comprises comparing the impacts of the plurality of deployment plans to generate statistics on variations between the plurality of deployment plans. Thereby a quantitative comparison between the deployment plans can be established which can allow for a sensitivity analysis to be performed on how susceptible the impact of the deployment plan is to modifications. In some examples, two or more of the plurality of deployment plans can comprise different numbers of potential cell sites. Thereby a range of deployment plans with different resource costs can be evaluated such that ROI curves can be calculated for the impact on network performance vs number of potential cell sites to be added.

In some examples, a plurality of deployment plans for the telecommunications network in different target areas are obtained, each deployment plan comprises a different plurality of potential cell sites, signal propagation maps are generated using the model for each of the different pluralities of cell sites, maps of predicted network performance are generated for each of the plurality of deployment plans, and the impact of each of the plurality of deployment plans is determined; the method further comprising comparing the impacts of the plurality of deployment plans in the different target areas to generate statistics on variations between the plurality of deployment plans across the different target areas. Thereby a comparison can automatically be generated to evaluate which target area would benefit to the greatest amount for a given resource expenditure.

In some examples, the method is performed for a plurality of telecommunications networks and the impact is determined based on aggregating the comparisons between the map of baseline network performance and the map of predicted network performance for each of the plurality of telecommunications networks. Thereby the impact on a plurality of telecommunications networks can be determined. This is of particular utility where one or more of the potential cell sites are neutral host cells or otherwise able to support the plurality of telecommunications networks simultaneously.

While figure 1 has been depicted as executing the steps of method 100 in a particular order it will be appreciated that in other examples the steps can be performed in any order where the prerequisite inputs for a given step are met. For example, step 104 can be performed before step 102. As another example, step 102 can be performed after step 106.

Figure 2 schematically illustrates two maps of network performance which can be used in implementing teachings of the disclosure. Figure 2A shows a map 200A where the data has been aggregated into hexbins and figure 2B shows a map 200B where the data has been aggregated at a per-building level. The shading on the maps indicates the value of a measure of signal quality. In some examples, the above-discussed map of baseline network performance and map of predicted network performance comprise data aggregated at the granularity of grid cell, hexbin and/or building. These different types of data aggregation/binning are useful for different use cases/environments. For example, when an indoor deployment is being considered (e.g. using small cells) the per-building aggregation may be useful. As another example, when consideration is being given to a network in a rural area, or another area with few obstacles, a hexbin and/or grid cell aggregation may be more appropriate.

In some examples, the map of baseline network performance is obtained by processing sensor data on the telecommunications network collected from a plurality of mobile network devices. In some examples, such sensor data is automatically collected from software components running on a large number user equipment (UE) devices such as mobile phones operating in the target area. From one perspective, such data collection can be considered as a form of crowd-sourced data collection. Thereby high-quality and high-resolution data on the state of the telecommunications network can be collected in an efficient manner. Further, such data can be collected from within private spaces such as offices and homes. In other examples, the map of baseline network performance is collected by a dedicated survey. Thereby data of a consistent quality and standard is collected. In other examples, the map of baseline network performance is generated through modelling. Thereby the map of baseline network performance can be obtained without the need for real-world data collection.

Figure 3 schematically illustrates a deployment plan for the telecommunications network in the target area which can be used in implementing teachings of the disclosure.

Figure 3 depicts a map 300 with a superimposed deployment plan, the map depicting a plurality of buildings 310, a plurality of streets 320, a plurality of existing cell sites 330 and a plurality of potential cell sites 340 which form the deployment plan. For clarity only one instance of each category is explicitly labelled but it will be appreciated that like symbols on the figure depict like elements. In the deployment plan some of the plurality of potential cell site 340 contain arrows. These arrows depict one or more orientation(s) associated with the cell sites (e.g. antenna orientations).

In some examples, each of the potential cell sites comprise a location and one or more orientations for the cell site. Where orientation are included for potential cell sites, this allows for the modelling of signal propagation to take into account the orientation of which (the antennas of) the potential cells sites would be mounted which can have a large effect on signal propagation and therefore enhances the accuracy of signal propagation. In other examples, each of the potential cell sites of the deployment plan do not comprise an orientation thereby reducing the amount of information needed for each potential cell site and simplifying the modelling.

In some examples, the potential cell sites represent potential small cell sites and/or potential neutral host cell sites. Thereby deployment plans can be evaluated which utilise small cells (which can be useful for indoor deployment and/or to cover small regions of high traffic) and neutral host cells (which can, for example, be useful for using a single cell site to provide supplementary coverage for a plurality of different telecommunication networks).

In some examples, the deployment plan 300 includes two or more potential cell sites 340 at the same location with different orientations. In figure 3, some of the locations are depicted as including two orientations (shown as two arrows in the figure) of potential cell sites at the same location. Where multiple orientations are associated with the same location the techniques of the disclosure can, in some examples, treat these as two separate cell sites that happen to share a location, or alternatively, in some examples the techniques of the disclosure can treat these as a single combined cell site that propagates signal in two different orientations. Thereby greater flexibility can be provided to the range of potential cell sites which can allow for a more efficient and/or realistic deployment plan to be evaluated. It will be appreciated that in some examples, more than two orientations can be associated with the same location thereby providing further flexibility.

Figure 4 schematically illustrates a signal propagation map 400 for a potential cell site (shown as a star). The signal propagation map can be of the type described above. The figure shows a signal propagation superimposed on a clutter location map showing a plurality of buildings and a plurality of streets. The figure shows that in some directions e.g. along streets, the signal propagates further. In other directions, e.g. when passing through buildings, the signal is rapidly attenuated.

Figure 5 schematically illustrates an example of an electronic device which can be used to implement teachings of the disclosure described above, including method 100.

The electronic device 500 has processing circuitry 510 for performing data processing in response to program instructions and data storage 520 for storing data and instructions to be processed by the processing circuitry 510. In some examples, the processing circuitry 510 includes one or more caches for caching recent data or instructions. The data storage 520 may have a database 530 which can, for example, store baseline network performance map(s), signal propagation map(s), predicted network performance map(s), deployment plan(s), and/or determined impacts. It will be appreciated that Figure 5 is merely an example of possible hardware that may be provided in the device and other components may also be provided. The device 500 may additionally or alternatively be provided with a communication interface 540 which can be used, for example, to obtain/receive baseline network performance map(s), updated network performance map(s) and/or deployment plan(s) and can be used to send impact assessments. The device 500 may additionally or alternatively be provided with one or more user input/output device(s) 550 to receive input from a user (e.g. parameters to determine deployment plan(s) or target areas) or to output information (e.g. impact assessments) to a user.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A computer-implemented method for determining the impact of a cell site deployment plan on a telecommunications network, the method comprising:
   obtaining a map of baseline network performance of the telecommunications network in a target area;
   obtaining a deployment plan for the telecommunications network in the target area, wherein the deployment plan comprises a plurality of potential cell sites;
   generating, using a model, a signal propagation map for each of the plurality of potential cell sites;
   generating a map of predicted network performance of the telecommunications network after deployment of the deployment plan based on combining the map of baseline network performance and the plurality of signal propagation maps;
   determining an impact of the deployment plan by performing a comparison between the map of baseline network performance and the map of predicted network performance.
2. The method of clause 1, wherein the map of baseline network performance is obtained by processing sensor data on the telecommunications network collected from a plurality of mobile network devices.
3. The method of clause 1 or clause 2, further comprising receiving an indication of the target area from a user.
4. The method of any preceding clause, wherein each of the potential cell sites comprise a location and one or more orientations for the cell site.
5. The method of any preceding clause, wherein the potential cell sites represent potential small cell sites and/or potential neutral host cell sites.
6. The method of any preceding clause, wherein obtaining the deployment plan comprises selecting the plurality of potential cell sites in the deployment plan from a larger plurality of potential cell sites using sampling.
7. The method of any preceding clause, wherein obtaining the deployment plan comprises receiving an indication of the plurality of potential cell sites for the deployment plan from a user.
8. The method of any preceding clause, wherein the model is a ray tracing model.
9. The method of any preceding clause, wherein a plurality of deployment plans for the telecommunications network in the target area are obtained,
   wherein each deployment plan comprises a different plurality of potential cell sites,
   wherein signal propagation maps are generated using the model for each of the different pluralities of cell sites,
   wherein maps of predicted network performance are generated for each of the plurality of deployment plans, and
   wherein the impact of each of the plurality of deployment plans is determined.
10. The method of clause 9, further comprising comparing the impacts of the plurality of deployment plans to generate statistics on variations between the plurality of deployment plans.
11. The method of clause 9 or clause 10, wherein two or more of the plurality of deployment plans comprise different numbers of potential cell sites.
12. The method of any preceding clause, wherein a plurality of deployment plans for the telecommunications network in different target areas are obtained,
   wherein each deployment plan comprises a different plurality of potential cell sites,
   wherein signal propagation maps are generated using the model for each of the different pluralities of cell sites,
   wherein maps of predicted network performance are generated for each of the plurality of deployment plans, and
   wherein the impact of each of the plurality of deployment plans is determined; and
   further comprising comparing the impacts of the plurality of deployment plans in the different target areas to generate statistics on variations between the plurality of deployment plans across the different target areas.
13. The method of any preceding clause, wherein performing the comparison to determine the impact comprises weighting regions of the target area based on degree of utilisation.
14. The method of any preceding clause, further comprising verifying the impact of the deployment plan by obtaining an updated map of network performance of the telecommunications in the target area.
15. The method of clause 15, wherein the updated map of network performance is obtained by processing sensor data on the telecommunications network collected from a plurality of mobile network devices.
16. The method of any preceding clause, wherein the map of baseline network performance and the map of predicted network performance comprise data on one or more of the RSSI, RSRP, SINR and/or RSSNR in the target area.
17. The method of any preceding clause, wherein the map of baseline network performance and map of predicted network performance comprise data aggregated at the granularity of grid cell, hexbin and/or building.
18. The method of any preceding clause, wherein the method is performed for a plurality of telecommunications networks and the impact is determined based on aggregating the comparisons between the map of baseline network performance and the map of predicted network performance for each of the plurality of telecommunications networks.
19. A computer program to control a device to perform the method of any preceding clause.
20. At least one computer-readable medium comprising the computer program of clause 19.
21. A device comprising a processor and data storage, the device configured to perform the method of any of clauses 1 to 20.

## Claims

1. A computer-implemented method for determining the impact of a cell site deployment plan on a telecommunications network, the method comprising:
obtaining a map of baseline network performance of the telecommunications network in a target area;
obtaining a deployment plan for the telecommunications network in the target area, wherein the deployment plan comprises a plurality of potential cell sites;
generating, using a model, a signal propagation map for each of the plurality of potential cell sites;
generating a map of predicted network performance of the telecommunications network after deployment of the deployment plan based on combining the map of baseline network performance and the plurality of signal propagation maps;
determining an impact of the deployment plan by performing a comparison between the map of baseline network performance and the map of predicted network performance.

2. The method of claim 1, wherein the map of baseline network performance is obtained by processing sensor data on the telecommunications network collected from a plurality of mobile network devices.

3. The method of claim 1 or claim 2, further comprising receiving an indication of the target area from a user.

4. The method of any preceding claim, wherein each of the potential cell sites comprise a location and one or more orientations for the cell site and/or wherein the potential cell sites represent potential small cell sites and/or potential neutral host cell sites.

5. The method of any preceding claim, wherein obtaining the deployment plan comprises selecting the plurality of potential cell sites in the deployment plan from a larger plurality of potential cell sites using sampling and/or comprises receiving an indication of the plurality of potential cell sites for the deployment plan from a user.

6. The method of any preceding claim, wherein a plurality of deployment plans for the telecommunications network in the target area are obtained,
wherein each deployment plan comprises a different plurality of potential cell sites,
wherein signal propagation maps are generated using the model for each of the different pluralities of cell sites,
wherein maps of predicted network performance are generated for each of the plurality of deployment plans, and
wherein the impact of each of the plurality of deployment plans is determined.

7. The method of claim 6, further comprising comparing the impacts of the plurality of deployment plans to generate statistics on variations between the plurality of deployment plans.

8. The method of claim 6 or claim 7, wherein two or more of the plurality of deployment plans comprise different numbers of potential cell sites.

9. The method of any preceding claim, wherein a plurality of deployment plans for the telecommunications network in different target areas are obtained,
wherein each deployment plan comprises a different plurality of potential cell sites,
wherein signal propagation maps are generated using the model for each of the different pluralities of cell sites,
wherein maps of predicted network performance are generated for each of the plurality of deployment plans, and
wherein the impact of each of the plurality of deployment plans is determined; and
further comprising comparing the impacts of the plurality of deployment plans in the different target areas to generate statistics on variations between the plurality of deployment plans across the different target areas.

10. The method of any preceding claim, wherein performing the comparison to determine the impact comprises weighting regions of the target area based on degree of utilisation.

11. The method of any preceding claim, further comprising verifying the impact of the deployment plan by obtaining an updated map of network performance of the telecommunications in the target area, for example, wherein the updated map of network performance is obtained by processing sensor data on the telecommunications network collected from a plurality of mobile network devices.

12. The method of any preceding claim, wherein the map of baseline network performance and the map of predicted network performance comprise data on one or more of the RSSI, RSRP, SINR and/or RSSNR in the target area and/or comprise data aggregated at the granularity of grid cell, hexbin and/or building.

13. The method of any preceding claim, wherein the method is performed for a plurality of telecommunications networks and the impact is determined based on aggregating the comparisons between the map of baseline network performance and the map of predicted network performance for each of the plurality of telecommunications networks.

14. A computer program encoding instructions which, when the program is executed by a device, cause the device to carry out the method of any of claims 1 to 13.

15. A device comprising a processor and data storage, the device configured to perform the method of any of claims 1 to 13.
